(19) Europäisches Patentamt
European Patent Office
Office européen des brevets

(11) **EP 0 722 167 A1**

(12) **EUROPEAN PATENT APPLICATION**
published in accordance with Art. 158(3) EPC

(43) Date of publication:
17.07.1996 Bulletin 1996/29

(21) Application number: 95926520.8

(22) Date of filing: 28.07.1995

(51) Int. Cl.⁶: **G11B 7/135**

(86) International application number:
PCT/JP95/01511

(87) International publication number:
WO 96/04649 (15.02.1996 Gazette 1996/08)

(84) Designated Contracting States:
DE FR GB

(30) Priority: 29.07.1994 JP 178205/94
28.10.1994 JP 265009/94

(71) Applicant: SONY CORPORATION
Tokyo 141 (JP)

(72) Inventors:
• EGUCHI, Naoya
Sony Corporation
Tokyo 141 (JP)
• WIECHMANN, Werner
Sony Corporation
Tokyo 141 (JP)

(74) Representative: Körber, Wolfhart, Dr. rer.nat. et al
Patentanwälte
Mitscherlich & Partner,
Sonnenstrasse 33
80331 München (DE)

(54) **OPTICAL PICKUP APPARATUS**

(57) Since an S-polarized laser beam sent out from a laser diode is ordinary ray with respect to an optical element having birefringent characteristics, it enters a quarter-wave plate with its optical path not changed. The quarter-wave plate turns this laser beam into circularly polarized light. An objective lens condenses the laser beam of circularly polarized light on a signal recording surface of a disk. The return light reflected on the signal recording surface of the disk enters the quarter-wave plate again through the objective lens. The quarter-wave plate turns this incident return light into P-polarized light. A laser beam of this P-polarized light becomes abnormal light with respect to an optical element (2) having birefringent characteristics. The optical element having birefringent characteristics changes the optical path of the P-polarized laser beam, the abnormal light. Accordingly, the return light from the disk does not return to the laser diode but to a light condensing surface of a photodetector.

FIG.3

## Description

Technical Field

This invention relates to an optical pick-up apparatus for carrying out irradiation of light and detection of return light with respect to an optical recording medium.

Background Art

In reading out signals recorded on an optical recording medium such as an optical disc, etc., an optical pick-up apparatus adapted for irradiating laser beams onto the optical recording medium to carry out detection of a return light thus obtained is used.

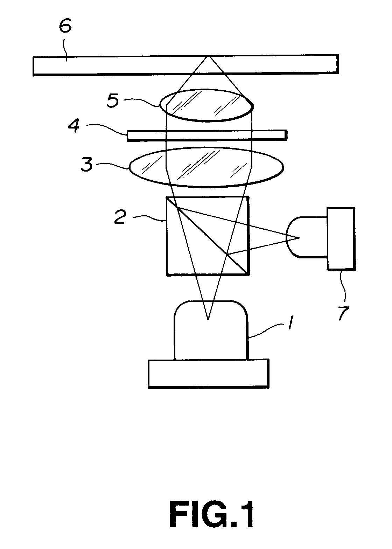

A typical configuration of the optical pick-up apparatus will be described below. An optical pick-up apparatus shown in FIG. 1 is an optical pick-up apparatus used in reproducing an optical disc 6, such as, for example, compact disc. In the case where laser beams emitted from a laser diode 1 serving as a light source is P-polarized light, i.e., linearly polarized light in which the direction of electric vector is in parallel to plane surface of paper of FIG. 1, the laser beams are transmitted through a polarization beam splitter (hereinafter referred to as PBS) 2, and are then incident to a collimator lens 3. This collimator lens 3 allows the laser beams to be parallel light flux (light beams) greater than the entrance pupil of an object lens (objective) 5. The laser beams which have been changed into parallel light flux by the collimator lens 3 are caused to circularly polarized light by a quarter wave (wavelength) plate 4, and are incident to the object lens 5. The object lens 5 converges the laser beams of circularly polarized light onto the signal recording surface of the optical disc 6. A return light reflected on the signal recording surface of the optical disc 6 is changed into parallel light flux (light beams) for a second time by the object lens 5, and is then incident to the quarter wave plate 4. The quarter wave plate 4 allows the incident return light to be S-polarized light, i.e., linearly polarized light in which the direction of electric vector is perpendicular to plane surface of paper of FIG. 1. The laser beams changed into S-polarized light are incident to the PBS 2 through the collimator lens 3. The PBS 2 irradiates the incident laser beams of S-polarized light onto the light converging surface of a photodetector 7 which serves as a light detector. The photodetector 7 outputs an electric signal corresponding to quantity of light irradiated onto the light converging surface.

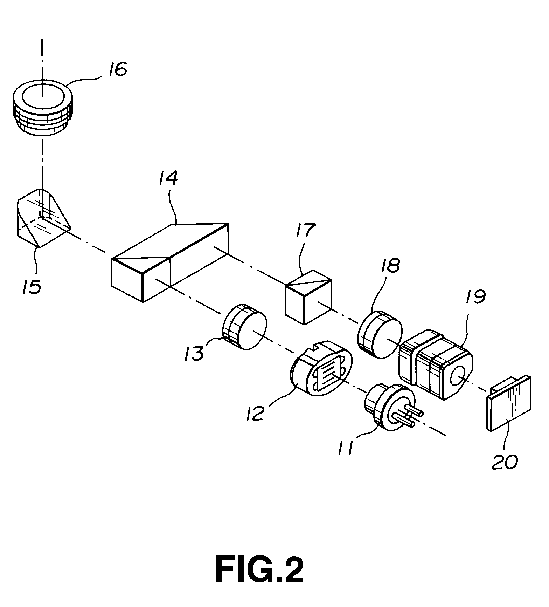

Moreover, an optical pick-up apparatus shown in FIG. 2 is an optical pick-up apparatus used in reading out a reproduction signal from, e.g., magneto-optical disc. Laser flux of light emitted from a laser diode 11 which is a light source is changed into three beams by a grating 12. These beams are changed into parallel beams (light flux) by a collimator lens 13, and are then incident to a beam splitter 14. The beam splitter 14 allows the laser beams (light flux) to be transmitted therethrough. The parallel laser beams (light flux) which have been transmitted through the beam splitter 14 are caused to undergo optical processing by a rising mirror 15 such that the traveling direction (optical path) is changed by 90 degrees, and then reach an object lens (objective) 16. The objective 16 converges the parallel laser beams (light flux) to irradiate them onto the signal recording surface on the disc.

A return light reflected on the signal recording surface on the disc is changed into parallel light beams (light flux) by the object lens 16 for a second time, and is reflected by the beam splitter 14. The reflected light thus obtained is guided to a photodetector 20 which is light detector through a Wollaston prism 17, a collimator lens 18, and a multi-lens 19.

The Wollaston prism 17 angular-separates the return light into P-polarized light and S-polarized light which are respectively linearly polarized light. The collimator lens 18 changes the angular-separated return light into parallel light beams (light flux). Then, this return light changed into the parallel light flux is separated into two spots on the photodetector 20 by the multi-lens 19, and they are converged thereunto. In this case, the return light is spatially separated into the P-polarized light and the S-polarized light. A difference signal between the P-polarized light and the S-polarized light becomes RF signal of magneto-optical signal. In addition, a sum signal of the P-polarized light and the S-polarized light is used as RF signal and servo signal from emboss pits.

Meanwhile, at present where quantity of information increases, optical discs as recording equipment for computer, or package media for music, image information such as compact disc, video disc, etc. have been popularized in a broad range. In order to increasingly carry out further popularization in future, realization of more compact and lower cost optical pick-up apparatuses has been anticipated. However, with the conventional optical pick-up apparatuses, as described above, the number of parts is large and adjustment of the light detector is required. As a result, stable servo signal cannot be obtained. For this reason, miniaturization and low cost could be realized.

An object of this invention is to provide an optical pick-up apparatus in which the number of parts is reduced, adjustment of the light detector is caused to become unnecessary and a stable servo signal can be obtained, thus making it possible to realize miniaturization and low cost.

Disclosure of the Invention

An optical pick-up apparatus according to this invention includes, in an outgoing optical path of light beams between a light source and an object lens (objective), an optical element having birefringence (double refraction) to exhibit the walk-off effect for carrying out separation between the light beams and light beams incident through the object lens.

In this case, between the object lens and the optical element having birefringence, a quarter wave (wavelength) plate is provided.

Moreover, the above-mentioned apparatus further includes first and second light receiving means adapted so that when the optical element produces, from light beams incident through the object lens, first light beams and second light beams having an optical axis of a predetermined angle relative to the optical axis of the first light beams, they respectively receive the first and second light beams.

Further, an optical pick-up apparatus according to this invention includes, between a light source and an object lens, an optical element for separating the light beams incident through the object lens from light beams emitted from the light source and for forming a focal point at a position different from in-focus position of the light beams incident through the object lens, and a light receiving element for receiving the light beams emitted from the optical element.

In this case, the light source and the light receiving element are integrally mounted on a base member.

Moreover, this apparatus also includes a quarter wave (wavelength) plate between the optical element and the object lens.

Further, an optical pick-up apparatus according to this invention includes an optical element provided between a light source and an object lens, and a light receiving element onto which light beams emitted from the optical element are converged, and adapted to allow the optical element to separate light beams reflected by an optical recording medium and incident through the object lens from the light beams emitted from the light source, and to vary shape of beams on the light receiving element of the light beams incident through the object lens in dependency upon displacement in a direction perpendicular to the recording surface of the optical recording medium.

In this case, this apparatus further includes a quarter wave (wavelength) plate between the optical element and the object lens.

In addition, an optical pick-up apparatus according to this invention includes, in an outgoing optical path of light beams emitted from a light source between the light source and an object lens, an optical element having birefringence to change, by 90 degrees, optical path of the light beams emitted from the light source and to exhibit to walk-off effect for carrying out separation between light beams emitted from the light source and light beams incident through the object lens, and a light receiving element for receiving light beams emitted from the optical element.

Brief Description of the Drawings

FIG. 1 is a view showing outline of the configuration of a conventional typical optical pick-up apparatus used for reproduction of optical disc.

FIG. 2 is a view showing outline of the configuration of a conventional typical optical pick-up apparatus used for reproduction of magneto-optical disc.

FIG. 3 is a view showing outline of the configuration of an optical pick-up apparatus which is a first embodiment of this invention.

FIG. 4 is a model view for explaining lateral shift by walk-off of optical element having birefringence used in the optical pick-up apparatus of which outline of the configuration is shown in FIG. 3.

FIG. 5 is a characteristic diagram showing the relationship between astigmatic difference and cutting angle.

FIG. 6 is a characteristic diagram showing the relationship between lateral shift quantity by walk-off and the cutting angle.

FIG. 7 is a schematic view for explaining focus error detection by astigmatic difference.

FIG. 8 is a model view for explaining astigmatic difference.

FIG. 9 is a view showing outline of the configuration of an optical pick-up apparatus capable of ensuring, with good accuracy, positional relationship between light emitting point and light receiving position, which is a modification of the first embodiment.

FIG. 10 is a view showing outline of the configuration of an optical pick-up apparatus which is a second embodiment of this invention.

FIG. 11 is a model view for explaining the state where parallel flat plate of optical element having birefringence is inserted in a convergent optical path in an inclined manner.

FIG. 12 is a model view for explaining focus error detection by astigmatic difference.

FIG. 13 is a view showing outline of the configuration of an optical pick-up apparatus of a first more practical example of the second embodiment.

FIG. 14 is a model view when the first more practical example is viewed from the disc side.

FIG. 15 is a side view of the first more practical view.

FIG. 16 is a view showing outline of the configuration of an optical pick-up apparatus of a second more practical example of the second embodiment.

FIG. 17 is a model view when the second more practical example is viewed from the disc side.

FIG. 18 is a side view of the second more practical example.

FIG. 19 is a view showing outline of the configuration of an optical pick-up apparatus which is a modification of the second embodiment of this invention.

Best Mode for carrying out the Invention

Explanation will now be given with reference to the attached drawings in connection with several embodiments of an optical pick-up apparatus according to this invention.

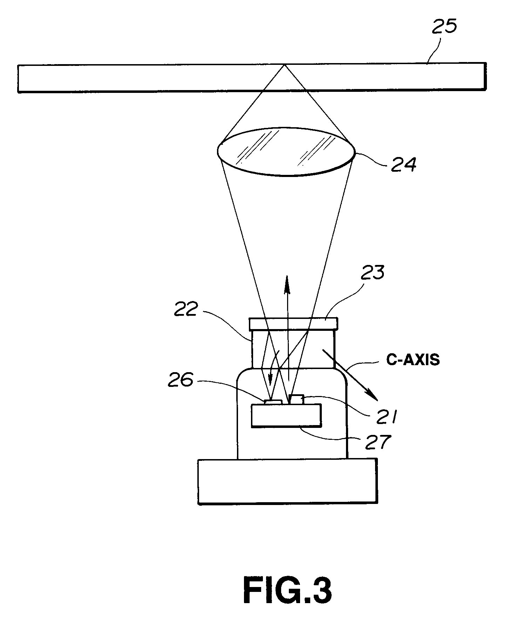

Initially, as shown in FIG. 3, the first embodiment is directed to an optical pick-up apparatus adapted to converge laser beams emitted from a laser diode 21 serving as a light source onto the signal recording surface of a disc 25, such as, for example, compact disc by an object lens (objective) 24 to detect a return light from the signal recording surface by a photodetector 26 serving as light detecting means to obtain a servo signal and a RF signal, wherein an optical element 22 having birefringence (double refraction) to carry out uni-axial birefringent action is disposed between the laser diode 21 and the object lens 24.

Namely, this optical pick-up apparatus is adapted to allow laser beams emitted from the laser diode 21 disposed at the position different from the photodetector 26 on the same base 27 to be incident to the object lens 24 through the optical element 22 having birefringence and a quarter wave (wavelength) plate 23 to converge such laser beams by the object lens 24 so as to irradiate them onto the signal recording surface of the disc 25. Further, this apparatus allows a return light from the signal recording surface of the disc 25 to be incident to the optical element 22 having birefringence through the quarter wave plate 23 to irradiate it onto the light converging surface on the photodetector 26 disposed at the position different from the outgoing portion of the laser diode 21 by the optical element 22 having birefringence.

The optical element 22 having birefringence uses the walk-off effect to carry out separation between laser beams emitted from the laser diode 21 and return light from the disc 25. As the optical element 22 having birefringence, there is, e.g., uni-axial birefringent crystal element. This birefringent crystal element is formed in a plate form having a pair of surfaces in parallel to each other, and is a crystal element having only one optical axis, wherein one of the electric main axes and one of crystal axes are in correspondence with each other, and the optical axis and beam axis (the rays of light axis) are also in correspondence with the electric main axis. As the birefringent crystal element, there exist lithium niobate (niobic acid) ($LiNbO_3$), yttrium vanadate (vanadic acid) and tellurium oxide ($TeO_2$). In addition, as optical element 22 having birefirngence, optical element by polymer, etc. may be used.

In the first embodiment, beam (rays of light) axis (hereinafter referred to as C-axis) of the optical element 22 having birefringence is in parallel to plane surface of paper as shown in FIG. 3. The beam (rays of light) axis taken as the C-axis is the axis along which rays of light travel at the highest speed in the optical element, and is described in "Handbook of Nonlinear Optical Crystal" (published by Springer-Verlag Company, 1990. 10) by V. G. Dmitriev, G. G. Gurzadyan, D. N. Nikogoayan. Namely, specific direction called beam (rays of light) axis exists in the uni-axial crystal. Beams having (plane of) polarization perpendicular to plane including this axis and wave vector of light wave are normal light, and beams having (plane of) polarization in parallel thereto are abnormal light.

In this example, the polarized light of laser beams emitted from the laser diode 21 is assumed to be linearly polarized light in which the direction of electric vector is perpendicular to plane surface of paper of FIG. 3. Moreover, the quarter wave plate 23 disposed between the optical element 22 having birefringence and the object lens 24 is such that the crystal orientation axis is set in a direction of 45 degrees of the incident polarized light direction. Particularly, in the first embodiment, the quarter wave plate 23 is attached at the incident surface side of return light incident from the object lens 24 side of the optical element 22 having birefringence.

When laser beams emitted from the laser diode 21 are assumed to be S-polarized light, i.e., linearly polarized light in which the direction of electric vector is perpendicular to plane surface of FIG. 3 as stated above, since the laser beams are normal light with respect to the optical element 22 having birefringence, there is no change of optical path. The laser beams which have been incident to the quarter wave plate 23 are caused to be circularly polarized light by the quarter wave plate 23, and are incident to the object lens 24. The object lens 24 converges the laser beams of circularly polarized light onto the signal recording surface of the disc 25. Laser beams reflected on the signal recording surface of the disc 25 are incident to the quarter wave plate 23 for a second time through the object lens 24. The quarter wave plate 23 allows the incident return light to be P-polarized light, i.e., the linear polarized light in which the direction of electric vector is in parallel to plane surface of paper of FIG. 3. The return light of the P-polarized light is incident to the optical element 22 having birefringence. In this case, this return light becomes abnormal light with respect to the optical element 22 having birefringence. For this reason, the return light is caused to undergo change of optical path in accordance with the walk-off angle. As a result, the return light does not return to the laser diode 21, but returns to the light converging surface of the photodetector 26. Namely, the quarter wave plate 23 serves to allow the return light to be abnormal light to allow the work-off effect at the optical element 22 having birefringence to be sufficiently exhibited so that the return light is not returned to the laser diode 21 side.

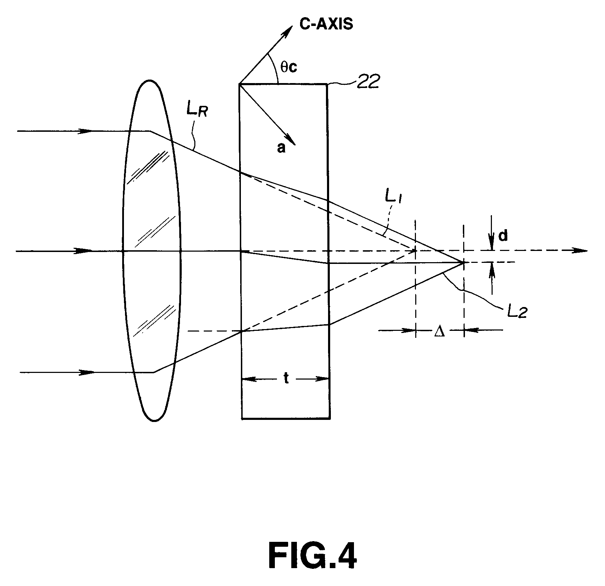

The state where the optical element 22 having birefringence changes optical path of the return light is shown in FIG. 4. In this case, the C-axis and the a-axis of the optical element 2 having birefringence of thickness t are in parallel to plane surface of paper. In addition, the optical element 22 having birefringence is cut out at angle $\theta_c$ with respect to the C-axis.

In the case where the incident return light $L_R$ is normal light with respect to the optical element 22 having birefringence, i.e., the direction of electric vector is perpendicular to plane surface of paper, the return light undergoes only floating up by the optical element 22 having birefringence. Transmitted light $L_1$ indicated by broken lines in the figure is light beams (flux) in the case where optical element 22 having birefringence is not disposed, and the normal light floats up in a direction perpendicular to plane surface of paper by the transmitted light $L_1$.

However, in the case where, as shown in FIG. 4, the incident return light $L_R$ is abnormal light with respect to the optical element 22 having birefringence, i.e., the direction of electric vector is in parallel to plane surface of paper, lateral shift (deviation) by the walk-off also takes place in the return light, resulting in the transmitted light $L_2$. In addition, astigmatic difference also takes place in the transmitted light $L_2$. Thus, focal line perpendicular to plane surface of paper and focal line in parallel thereto take place. At this time, longitudinal shift (deviation) $\Delta$ and lateral shift (deviation) d take place in the transmitted light $L_1$ and the transmitted light $L_2$. When refractive index with respect to incident light is designated at n, longitudinal shift $\Delta$ is expressed as $\Delta = (1-1/n)\, t$ .

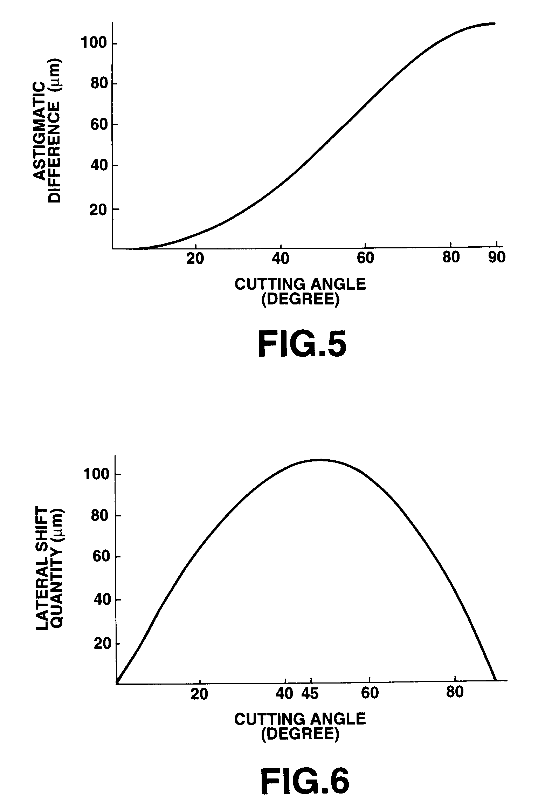

Change of the astigmatic difference per thickness of 1 mm at wavelength of 780 nm when $YVO_4$ is used as the optical element 2 having birefringence is shown in FIG. 5. In FIG. 5, the ordinate indicates astigmatic difference and the abscissa indicates cutting angle $\theta_c$. In this FIG. 5, according as the thickness t becomes greater, the characteristic shifts to the upper side. When the cutting angle $\theta_c$ is 90 degrees, the astigmatic difference becomes maximum.

Change of lateral shift quantity per thickness of 1 mm at wavelength of 780 nm when $YVO_4$ is used as optical element 22 having birefringence is shown in FIG. 6. In FIG. 6, the ordinate indicates lateral shift quantity and the abscissa indicates the cutting angle $\theta_c$. According as the thickness t becomes greater, the characteristic shifts to the upper side. In this case, at the cutting angle $\theta_c$ of 90 degrees where the astigmatic difference quantity becomes maximum, the lateral shift quantity would become equal to zero. Moreover, also when the cutting angle $\theta_c$ is O degrees, the lateral shift quantity becomes equal to 0. When the cutting angle $\theta_c$ is 45 degrees, the lateral shift quantity becomes maximum. Accordingly, it is understood that the optical element 22 having birefringence preferably utilizes the walk-off effect to change the optical path within the range except for zero (0) degrees and 90 degrees. Particularly, in the case where lateral shift quantity is taken into consideration, it is preferable that the cutting angle $\theta_c$ is caused to roughly fall within the range more than 20 degrees and less than 90 degrees.

By making use of the astigmatic difference by such walk-off of the optical element 22 having birefringence, it is possible to detect a focus error signal of the disc 25.

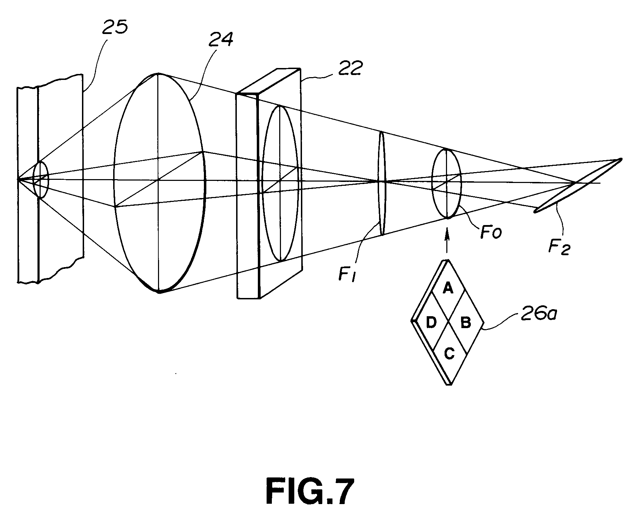

The principle of the astigmatic difference applied to this embodiment will now be described with reference to FIG. 7. When optical element 22 having birefringence is disposed in converged light beams, astigmatic difference takes place with respect to abnormal light as shown in FIG. 7. As a result, two focal lines $F_1$, $F_2$ perpendicular to each other appear. Substantially at the intermediate point of these two focal lines $F_1$, $F_2$, minimum blur circle (circle of confusion) $F_0$ appears. A photodetector 26 having quadri-sected light converging surface 26a is disposed on the minimum blur circle $F_0$. In this case, as the minimum blur circle $F_0$, minimum blur circle when spot is converged at the focal point position on the disc is used.

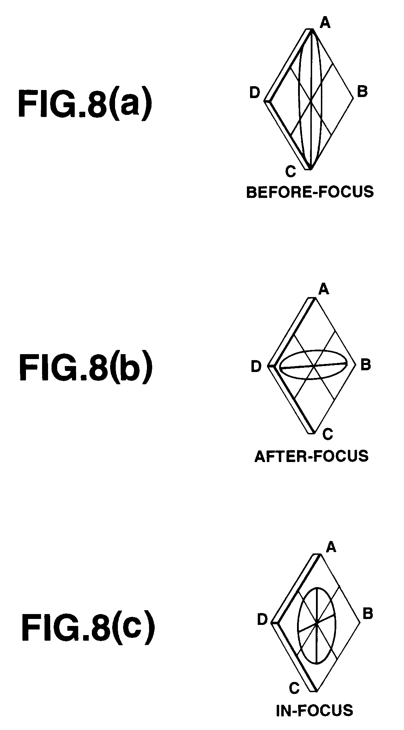

It is confirmed that when the spot that the return light forms becomes an ellipse longer in longitudinal direction as shown in (a) of FIG. 8 on the light converging surface 26a of the photodetector 26 on the minimum blur circle $F_0$, the spot on the disc 25 is in the before-focus state. Moreover, it is confirmed that when the spot that the return light forms becomes an ellipse longer in a lateral direction as shown in (b) of FIG. 8, the spot on the disc 25 is in the after-focus state. In addition, it is confirmed that when the spot that the return light forms becomes a complete round as shown in (c) of FIG. 8, the spot on the disc 25 is in the in-focus state. Accordingly, when an operation (calculation) expressed below is performed on the light converging surface 26a of the photodetector 26,

$$(A+C) - (B+D)$$

it is possible to detect a focus error signal.

As stated above, the optical pick-up apparatus of the first embodiment is of a structure in which optical element 22 having birefringence is disposed between the laser diode 21 and the object lens 24 to allow a return light from the signal recording surface of the disc 25 to be incident to the optical element 22 having birefringence through the quarter wave plate 23 to irradiate it onto the quadri-sected light converging surface 26a on the photodetector 26 disposed at the position different from the laser diode 21 serving as a laser beam outgoing portion by the optical element 22 having birefringence to detect a focus error signal. Accordingly, the optical pick-up apparatus of this embodiment can irradiate return light onto the light detector in the state spaced from the outgoing position of the light source by lesser number of parts. In addition, adjustment for light detection becomes unnecessary. Thus, stable servo signal is obtained.

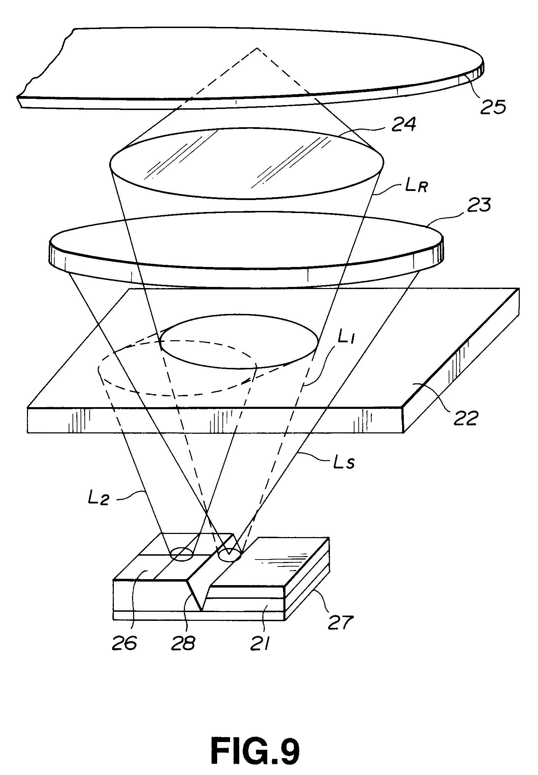

It should be noted that the optical pick-up apparatus according to this invention is not limited only to the first embodiment, but may be, e.g., an optical pick-up apparatus of which outline of the configuration is as shown in FIG. 9. Namely, the optical pick-up apparatus serving as modification of the first embodiment is of a structure in which laser diode 21 and photodetector 26 are mounted on the same base (substrate) 27, wherein a rasing mirror 28 is formed at the position close to the light emitting portion of the laser diode 21. Laser beams emitted from the laser diode 21 are linearly polarized light of S-polarized light. Laser beams $L_s$ of which optical path (traveling direction) is changed by 90 degrees by the rising mirror 28 are transmitted through optical element 22 having birefringence, and are then changed into circularly polarized light by quarter wave plate 23. Thus, the circularly polarized light thus obtained is incident to the object lens 24. The object lens 24 converges laser beams $L_s$ of circularly polarized light onto the signal recording surface of the disc 25. On the other hand, laser beams $L_R$ reflected on the signal recording surface of the disc 25 are incident to the quarter wave plate 23 for a second time through the object lens 24. The quarter wave plate 23 changes the incident laser beams $L_R$ into linearly polarized light of P-polarized light. The laser beams $L_R$ of P-polarized light becomes abnormal light with respect to the optical element 22 having birefringence. For this reason, the laser beams $L_R$ is caused to undergo change of optical path in dependency upon the walk-off angle. As a result, these laser beams $L_R$ do not return to the rising mirror 28, but return to the light converging surface 26a of the photodetector 26.

The modification of the first embodiment can also irradiate a return light onto the photodetector in the state spaced from the outgoing position of the light source by lesser number of parts. Moreover, adjustment for eight detection becomes unnecessary. Thus, stable servo signal can be obtained. Particularly, this modification employs the configuration in which rising mirror 28 is provided, thereby making it possible to ensure, with good accuracy, the positional relationship between the light emitting point of laser beams and the light converging surface of the photodetector 26.

It is to be noted that, in the first embodiment and the modification thereof, the photodetector serving as the light detecting means and the optical element having birefringence may be integrally formed. Moreover, the object lens, the quarter wave plate and the optical element having birefringence may be integrally constituted. It is a matter of course that if the positional relationship of the object lens, the quarter wave plate and the optical element having birefringence can be maintained, it is not required that they are integrated. Moreover, as the object lens, object lens of infinity magnification may be used.

Further, as the optical element having birefringence, in addition to birefringent crystal elements such as $LiNbO_3$, $YVO_4$ and $TeO_2$, etc. as described above, optical element by polymer, etc. may be used. For example, there can be applied polymer described in "In-situ photopolymerization of oriented liquid-crystalline acrylates, 4. Influence of a lateral methyl substituent on monomer and oriented polymer network properties of a mesogenic diacrylate" (Makromol. Chem. 190, 3201-3215 (1989) by Dirk J. Broer, Rifat A. M. Hikmet, Ger Challa. This polymer is derivative having methyl substituent (substitutional group) at 1, 4-phenylenebis {4-(6-(acryloyloxy) hexyloxy) benzoate)} and the center phynylene group thereof.

Moreover, a light source such as laser diode may be integrated with MPD (Micro prism detector) for carrying out detection of return light.

While it has been described that focusing control is carried out by a signal obtained by the photodetector, it is needless to say that the above-mentioned optical pick-up apparatus can carry out tracking control, or carry out reproduction of RF signal by a signal obtained by the photodetector.

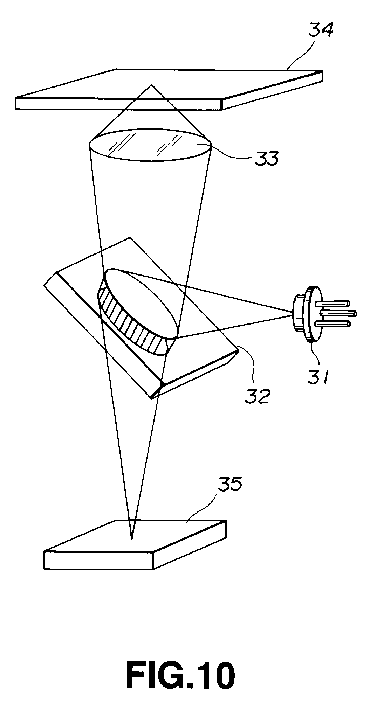

As shown in FIG. 10, the second embodiment is directed to an optical pick-up apparatus adapted for converging laser beams from a laser diode 31 serving as a light source onto the signal recording surface of a disc 34, such as, for example, magneto-optical disc by an object lens 33 to detect return light from the signal recording surface by a photodetector 35 serving as light detecting means to obtain a servo signal and a RF signal. This apparatus is caused to be of simple structure of finite magnification in which collimator lens is omitted. Particularly, this optical pick-up apparatus is characterized in that an optical element 32 having uni-axial birefringence is obliquely disposed between the object lens 33 and the photodetector 35.

In operation, the optical pick-up apparatus allows laser beams emitted from the laser diode 31 to be partially reflected on the surface of optical element 32 having uni-axial birefringence obliquely disposed between the object lens 33 and the photodetector 35 to guide it to the object lens 33. The object lens 33 converges the laser beams to irradiate them onto the signal recording surface of the disc 34.

Moreover, a return light reflected on the signal recording surface of the disc 34 comes to the optical element 32 having uni-axial birefringence for a second time through the object lens 33. In this case, the optical element 32 having uni-axial birefringence allows a portion of the return light to be transmitted therethrough to allow it to be incident to the photodetector 35. The return light incident to the photodetector 35 is spatially separated, by birefringence, into two polarized light components of a S-polarized light of normal light in which the direction of electric vector is perpendicular to plane surface of paper and a P-polarized light of abnormal light in which the direction of electric vector is in parallel to plane surface of paper. A difference signal between the P-polarized light and the S-polarized light is used as a magneto-optical RF signal. Moreover, a sum signal of the P-polarized light and the S-polarized light is used in obtaining RF signal and servo signal from emboss pits. Such a polarization film coating to allow the P-polarized light to be reflected by, e.g., 70% and to be transmitted therethrough by, e.g., 30%, and to allow the S-polarized light to be transmitted therethrough by, e.g., 100% is implemented onto the surface of the optical element 32 having uni-axial birefringence.

The optical element 32 having uni-axial birefringence obliquely disposed between the object lens 33 and the photodetector 35 will now be described.

The optical element 32 having uni-axial birefringence uses the walk-off effect to carry out separation between laser beams emitted from the laser diode 31 and return light from the disc 34. As the optical element 32 having uni-axial birefringence, there is, e.g., birefringent crystal element. This birefringent crystal element is formed in a plate form having a pair of surfaces in parallel to each other. As the birefringent crystal element, lithium noibate (niobic acid) ($LiNbO_3$), yttrium vanadate (vanadic acid) ($YVO_4$) and tellurium oxide ($TeO_2$) exist. In addition, as the optical element 32 having uni-axial birefringence, optical element by polymer, etc. may be used.

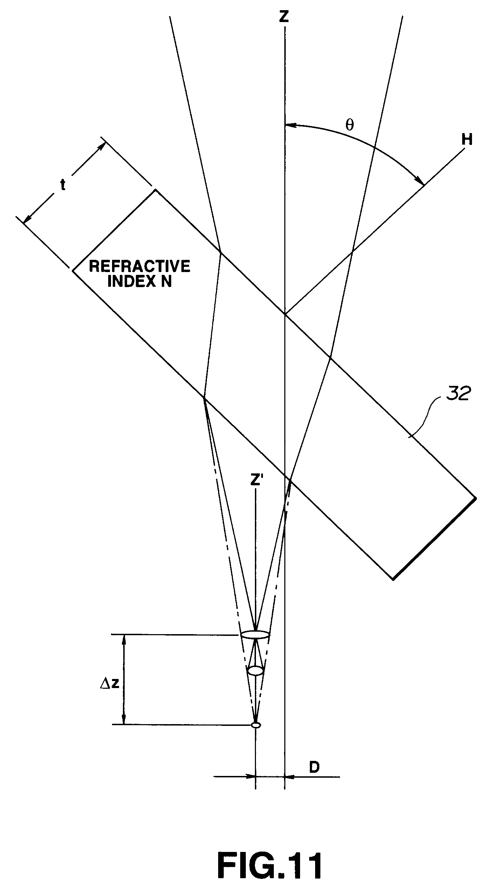

Initially, the case where the uni-axial birefringent crystal element 32 is inserted in the inclined state in convergent light will be described with reference to FIG. 11. When the birefringent crystal element 32 in the inclined state is inserted in convergent light, the optical axis z laterally shifts (deviates) (represented by the optical axis z'in the figure). As a result, astigmatic difference also takes place. When it is assumed that the thickness of the birefringent crystal element 32 is t, the refractive index is N, and an angle that the normal of the birefringent crystal element 32 and the optical axis z form is $\theta$, the astigmatic difference $\Delta z$ produced is expressed as follows:

$$\Delta z = -t\frac{(N^2-1)\sin^2\theta}{(N^2-\sin^2\theta)^{3/2}} \tag{1}$$

The above-mentioned formula (1) holds irrespective of numerical aperture of the focusing lens. The convergent point within plane formed by the normal H of the birefringent crystal element 32 and the optical axis z is formed after (behind) the convergent point within plane perpendicular thereto.

Moreover, the lateral shift quantity D of the optical axis z (lateral shift quantity from the optical axis z to the optical axis z') is expressed as follows:

$$D = t\sin\theta \left(1-\frac{\sqrt{1-\sin^2\theta}}{\sqrt{N^2-\sin^2\theta}}\right) \tag{2}$$

Accordingly, when the birefringent crystal element 32 is inserted into convergent light beams, two light beams having astigmatic differences and lateral shift quantities different by difference between refractive index at normal light and abnormal light are formed. This is called tilt plate effect.

Difference between the astigmatic difference $\Delta z_o$ of normal light and astigmatic difference $\Delta z_{co}$ of abnormal light ($\Delta z_o - \Delta z_{co}$) is expressed as follows:

$$\Delta z_o - \Delta z_{co} = t\frac{(N_o^2-1)\sin^2\theta}{(N_o^2-\sin^2\theta)^{3/2}} - t\frac{(N_{co}^2-1)\sin^2\theta}{(N_{co}^2\sin^2\theta)^{3/2}} \tag{3}$$

Moreover, difference between lateral shift quantity $D_o$ of normal light and lateral difference quantity $D_{co}$ of abnormal light ($D_o - D_{co}$) is expressed as follows.

$$D_o - D_{co} = t\sin\theta \left(1-\frac{\sqrt{1-\sin^2\theta}}{\sqrt{N_o^2-\sin^2\theta}}\right) - t\sin\theta \left(1-\frac{\sqrt{1-\sin^2\theta}}{\sqrt{N_{co}^2-\sin^2\theta}}\right) \tag{4}$$

Let now calculate difference of astigmatic difference and difference of lateral shift quantity in the case where the birefringent crystal element 32 is, e.g., $YVO_4$. Consideration will be made in connection with the case where the thickness t is l mm, angle $\theta$ that the normal of the element 32 and the optical axis z form is 45 degrees, refractive index $N_o$ of normal light is 1.9734, and refractive index $N_{co}$ of abnormal light is 2.18936.

The astigmatic differences $\Delta z_o$ and $\Delta z_{co}$ of the normal light and the abnormal light are respectively 231 $\mu$m and 213 $\mu$m. As a result, difference between astigmatic differences ($\Delta z_o - \Delta z_{co}$) becomes equal to 18 $\mu$m. Moreover, lateral shift

quantities $D_o$ and $D_{co}$ of the normal light and the abnormal light are respectively 436 μm and 466 μm. As a result, difference ($D_o$ -$D_{co}$) between lateral shift quantities becomes equal to 30 μm.

Since the principle in the case where convergent light $L_R$ is incident to such birefringent crystal element 32 is the same as the principle which has been described with reference to the FIG. 4 mentioned above, the explanation thereof is omitted here.

Change of the astigmatic difference quantity per thickness of 1 mm at wavelength of 780 nm when YVO$_4$ is used as the birefringent crystal element 32 is the same as that of the FIG. 5 mentioned above. Moreover, change of lateral shift quantity per thickness of 1 mm at the wavelength of 780 nm when YVO$_4$ is used as the birefringent crystal element 32 is also the same as that of the FIG. 6 mentioned above.

Namely, it is desirable that the direction of the C-axis of the birefringent crystal element 32 and the polarization direction of the return light form angles except for 0 degrees and 90 degrees on a plane perpendicular to the optical axis of the return light. Particularly, it is preferable that that angle is 45 degrees.

When, e.g., the cutting angle $\theta_c$ is 45 degrees, the astigmatic difference of the abnormal light becomes equal to 40 μm and the lateral shift quantity becomes equal to 100 μm.

By combination of the tilt plate effect and the walk-off effect described above, the difference between astigmatic differences of the normal light and the abnormal light can be held down to about 20 μm, and the difference between lateral shifts of the normal light and the abnormal light can be increased within the range of 130 μm at the maximum. Accordingly, values of astigmatic differences of the normal light and the abnormal light can ensure value of about 230 μm.

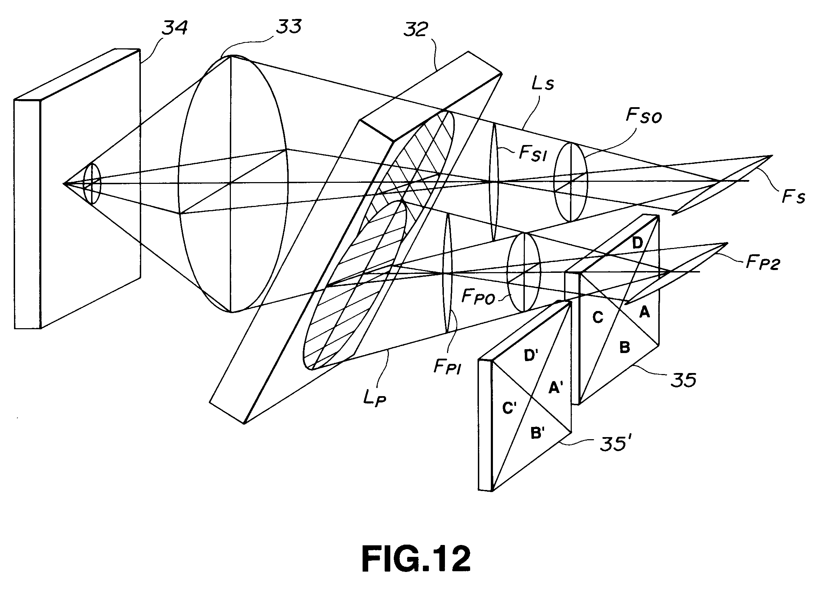

The principle of the astigmatic difference method applied to the second embodiment will now be described with reference to FIG. 12. When birefringent crystal element 32 is disposed in convergent light beams in an inclined manner, an incident light is separated into two kinds of light beams laterally shifted of normal light $L_s$ and abnormal light $L_p$ by the tilt plate effect and the walk-off effect described above. Astigmatic differences take place with respect to respective separated light beams $L_s$, $L_p$ as shown in FIG. 12, so two focal lines perpendicular to each other appear. By the astigmatic difference taking place in the normal light $L_s$, focal lines $F_{s1}$ and $F_{s2}$ appear. Moreover, focal lines $F_{p1}$ and $F_{p2}$ appear in the abnormal light $L_p$. Substantially at the intermediate point of these respective two focal lines, minimum blur circles $F_{so}$ and $F_{po}$ appear. For example, quadrisected detectors 35 and 35' are disposed on the minimum blur circles $F_{so}$ and $F_{po}$. As such minimum blur circles $F_{so}$ and $F_{po}$, minimum blur circle when the spot is converged (focused) at the focal point position on the disc 34 is used.

It is found out that when, e.g., the spot that the return light forms becomes ellipse longer in longitudinal direction as shown in (a) of the FIG. 8 mentioned above on the light converging surface of the photodetector 35 on the minimum blur circle $F_{so}$, spot on the disc is in the before-focus state. Moreover, it is found out that when spot that the return light forms becomes ellipse longer in a lateral direction as shown in (b) of FIG. 8, spot on the disc is in the after-focus state. In addition, it is found out that when the spot on the disc becomes complete round as shown in (c) of FIG. 8, spot on the disc is in the in-focus state. Accordingly, when an operation expressed below is performed on the light converging surface of the photodetector,

$$(A+C) - (B+D)$$

it is possible to detect a focus error signal.

Further, operations expressed below are respectively carried out with respect to the normal light and the abnormal light to add operation results.

$$(A+C) - (B+D)$$

$$(A'+C') - (B'+D')$$

Namely, an operation expressed below is performed.

$$(A+C) - (B+D) + (A'+C') - (B'+D')$$

This operation result can be used as the focus error signal. Since this focus error signal is an additive signal of the normal light and the abnormal light, it is possible to eliminate the influence of spatial deviation of light polarization-detected by bi-axial birefringence of the disc base (substrate). Thus, stable focus error signal can be obtained. It is to be noted that the push-pull method is applied, thereby making it possible to realize tracking by an operation expressed as $(A+D)-(B+C)$ . In addition, in the case where this is carried out by the three spot method, it is sufficient to provide grating at the upper portion of the laser diode 31.

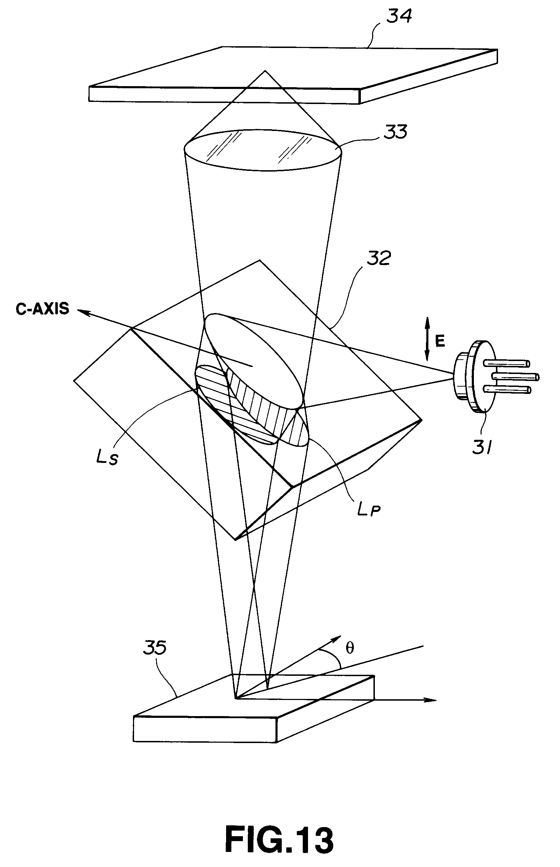

Several more practical examples of the optical pick-up apparatus which is the second embodiment will now be described with reference to FIGS. 13 to 19. The respective more practical examples are distinguished by changing the positional relationship between the direction of the C-axis and the polarization direction of laser beams (the direction of electric vector).

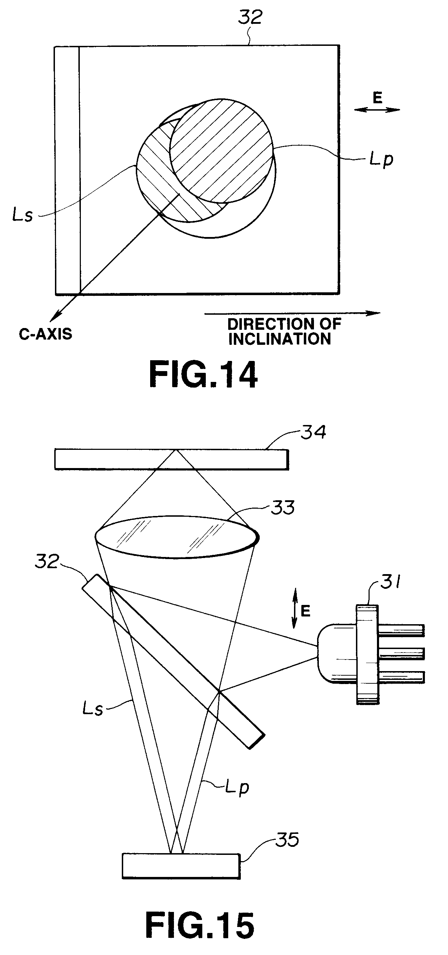

Initially, in the first embodiment, the positional relationship between the direction of the C-axis of the birefringent crystal element 32 and polarization direction of laser beams (the direction of electric vector indicated by E in the figure) is caused to be as shown in FIG. 13. Such a polarization film coating to allow the P-polarized light to be reflected by, e.g., 70% and to be passed therethrough by, e.g., 30%, and to allow the S-polarized light to be transmitted therethrough by, e.g., 100% is implemented onto the surface of the birefringent crystal element 32. The view when viewed from the disc side is shown in FIG. 14 and the view when viewed from the side surface is shown in FIG. 15. Particularly, the positional relationship that laser beams are projected (irradiated) onto a plane perpendicular to the incident optical axis onto the disc is shown in FIG. 14. Namely, in the first more practical example, the polarization direction of laser beams is in parallel to the incident optical axis onto the disc 34. With respect to the polarization direction of light reflected on the disc 34, the direction of the C-axis of the birefringent crystal element 32 has an angle of 45 degrees as the result of projection (irradiation) onto the plane perpendicular to the incident optical axis onto the disc 34.

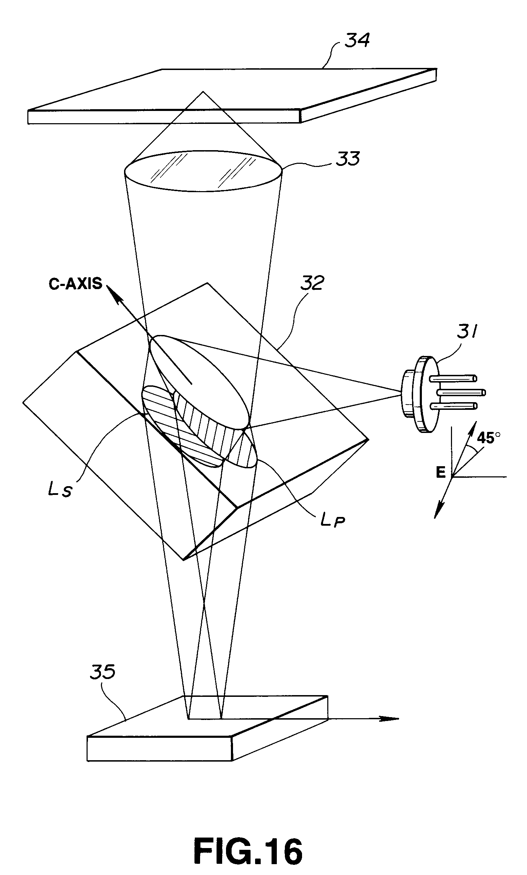

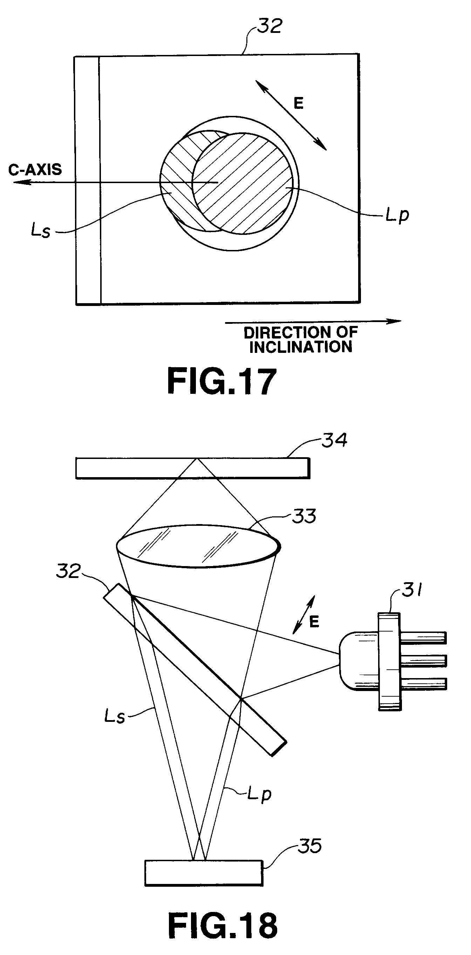

Further, in the second more practical example, the positional relationship between the direction of the C-axis of the uni-axial birefringent crystal element and the polarization direction of laser beams (the direction of electric vector designated at E in the figure) is caused to be as shown in FIG. 16. Arrangement of respective elements constituting the optical system is similar to that of the FIG. 13 mentioned above. The view when viewed from the disc side is shown in FIG. 17, and the view when viewed from the side surface is shown in FIG. 18. Particularly, the positional relationship that laser beams are projected onto the plane perpendicular to the incident optical axis onto the disc is shown in FIG. 17. Namely, in the second embodiment, there holds the relationship that the polarization direction of laser beams has 45 degrees relative to the incident optical axis onto the disc. With respect to the polarization direction of light reflected on the disc, the direction of the C-axis of the birefringent crystal element 32 has an angle of 45 degrees as the result of projection onto the plane perpendicular to the incident optical axis onto the disc.

As stated above, the optical pick-up apparatus of the second embodiment can detect a magneto-optical signal by a simple structure such that optical element having birefringence is disposed between the object lens and the light detector. Namely, since the optical pick-up apparatus of this embodiment can irradiate return light onto the light detector in the state spaced from the outgoing position of the light source by lesser number of parts, low cost and miniaturization can be attained. In addition, adjustment for light detection becomes unnecessary. Thus, stable focus error detection signal can be obtained.

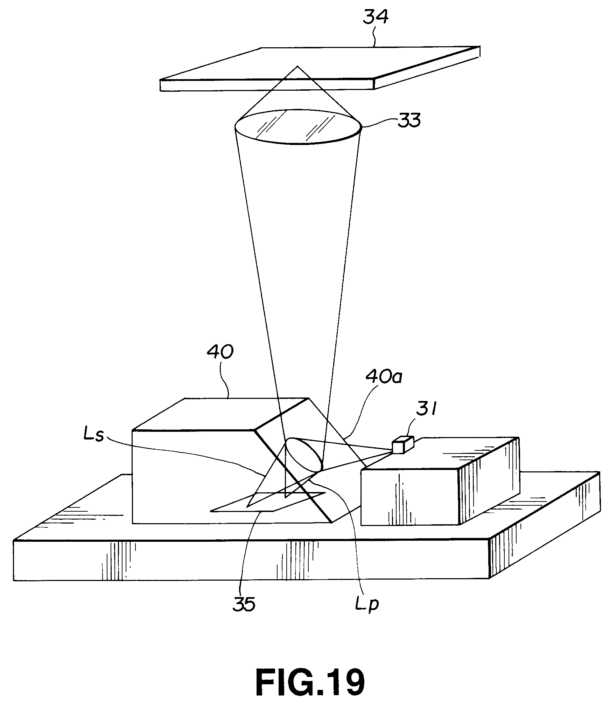

A modification of the second embodiment will now be described. The modification of the second embodiment uses a birefringent crystal element 40 having the side surface as an inclined surface 40a as shown in FIG. 19. This birefringent crystal element 40 is wedge-shaped. The birefringent crystal element 40 reflects, by 90 degrees, laser beams from the laser diode 31 on the incline surface 40a to guide a reflected light thus obtained to the disc. The light reflected on the disc is passed through the inclined surface, and is guided to photodetector 35. At this time, the reflected light is separated into two kinds of light beams of the normal light $L_s$ and the abnormal light $L_p$ by the wedge-shape effect and the walk-off effect. A difference signal therebetween is used as a magneto-optical RF signal. In addition, a sum signal of the normal light and the abnormal light is used for detection of RF signal and servo signal from emboss pits.

As stated above, since the modification of the second embodiment can also irradiate return light in the state spaced from the outgoing position of the light source by lesser number of parts, low cost and miniaturization can be attained. In addition, adjustment for light detection becomes unnecessary. Thus, stable focus error detection signal can be obtained.

It is to be noted that the pattern of the photodetector serving as the light detector may be of course quadri-sected pattern as described above, but may be tri-sected pattern. Moreover, the photodetector and the light source may be integrated. Further, the photodetector and the optical element having birefringence may be integrated.

Furthermore, as the optical element having birefringence, optical element by polymer, etc. as described above may be used in addition to birefringent crystal element such as $Linbo_3$, $YVo_4$ and $YeO_2$, etc.

Further, the light source may be integrated with the MPD (micro prism detector) for carrying out detection of light.

In addition, object lens of infinite magnification may be used as the object lens.

## Claims

1. An optical pick-up apparatus comprising:
   a light source;
   an object lens for allowing light beams emitted from the light source to be converged at a point on the optical axis; and
   an optical element disposed in an outgoing optical path of light beams emitted from the light source between the light source and the object lens, and having birefringence to exhibit the walk-off effect for carrying out separation between the light beams emitted from the light source and light beams incident through the object lens.

2. An optical pick-up apparatus as set forth in claim 1,
   wherein the optical element is comprised of uni-axial birefringent crystal element.

3. An optical pick-up apparatus as set forth in claim 2,
   wherein the birefringent crystal element is disposed so that the crystal axis of the birefringent crystal element is in correspondence with the polarization surface of light beams emitted from the light source.

4. An optical pick-up apparatus as set forth in claim 2,
   wherein the optical element is formed in a plate form having a pair of surfaces opposite to each other.

5. An optical pick-up apparatus as set forth in claim 1,
   which further comprises a quarter wave plate disposed between the optical element and the object lens.

6. An optical pick-up apparatus as set forth in claim 5,
   wherein the quarter wave plate is attached at the incident surface side of light beams incident through the object lens of the optical element.

7. An optical pick-up apparatus as set forth in claim 2,
   wherein the optical element is disposed so that rays of light axis along which light beams travel at the highest speed in the optical element takes 45 degrees relative to the polarization direction of the light beams emitted from the light source.

8. An optical pick-up apparatus as set forth in claim 2,
   wherein the optical element is such that the rays of light axis of the optical element is disposed in a direction where the P-polarized light component and the S-polarized light component of the light beams incident through the object lens are substantially to each other.

9. An optical pick-up apparatus as set forth in claim 2,
   wherein the optical element is disposed in the state inclined on the optical axis of the object lens so as to change, by 90 degrees, the optical path of light beams emitted from the light source to allow the light beams emitted from the light source to be reflected and to allow the light beams incident through the object lens to be transmitted therethrough.

10. An optical pick-up apparatus as set forth in claim 9,
    wherein the optical element produces, from light beams incident through the object lens, first light beams and second light beams having an optical axis of a predetermined angle with respect to the optical axis of the first light beams.

11. An optical pick-up apparatus as set forth in claim 10,
    which further comprises first and second light receiving means for respectively receiving the first and second light beams.

12. An optical pick-up apparatus as set forth in claim 11,
    wherein the first and second light receiving means are disposed within the same plane.

13. An optical pick-up apparatus as set forth in claim 9,
    wherein the optical element produces normal rays of light and abnormal rays of light from light beams incident through the object lens.

14. An optical pick-up apparatus as set forth in claim 13,
    which further comprises first and second light receiving means for respectively receiving the normal rays of light and the abnormal rays of light.

15. An optical pick-up apparatus as set forth in claim 14,
    wherein the first and second light receiving means are disposed within the same plane.

16. An optical pick-up apparatus comprising:
    a light source;
    an object lens for allowing light beams emitted from the light source to be converged at a point on the optical axis;

an optical element disposed between the light source and the object lens to separate light beams incident through the object lens from the light beams emitted from the light source, and to form a focal point at a position different from the in-focus point of the light beams incident through the object lens; and

a light receiving element for receiving light beams emitted from the optical element.

17. An optical pick-up apparatus as set forth in claim 16,
which further comprises a base member on which the light source and the light receiving element are provided.

18. An optical pick-up apparatus as set forth in claim 16,
wherein the optical element is comprised of uni-axial birefringent crystal element.

19. An optical pick-up apparatus as set forth in claim 18,
wherein the birefringent crystal element is disposed so that the crystal axis of the birefringent crystal element is in correspondence with polarization plane of the light beams emitted from the light source.

20. An optical pick-up apparatus as set forth in claim 18,
wherein the optical element is formed in a plate form having a pair of surfaces in parallel to each other.

21. An optical pick-up apparatus as set forth in claim 16,
which further comprises a quarter wave plate disposed between the optical element and the object lens.

22. An optical pick-up apparatus as set forth in claim 21,
wherein the quarter wave plate is attached at the incident surface side of light beams incident through the object lens of the optical element.

23. An optical pick-up apparatus comprising:
a light source;
an object lens for allowing light beams emitted from the light source to be converged at a point on an optical recording medium;
an optical element disposed between the light source and the object lens; and
a light receiving element onto which light beams emitted from the optical element are converged,
whereby the optical element separates light beams reflected by the optical recording medium and incident through the object lens from the light beams emitted from the light source, and to change beam shape on the light receiving element of light beams reflected by the optical recording medium and incident through the object lens in dependency upon displacement in a direction perpendicular to the recording surface of the optical recording medium.

24. An optical pick-up apparatus as set forth in claim 23,
wherein the optical element allows light beams incident through the object lens to produce astigmatic difference in dependency upon displacement in a direction perpendicular to the recording surface of the optical recording medium.

25. An optical pick-up apparatus as set forth in claim 24,
wherein the optical element forms a focal point at a position before the in-focus position of the light beams incident through the object lens.

26. An optical pick-up apparatus as set forth in claim 23,
wherein the optical element is comprised of uni-axial birefringent crystal element.

27. An optical pick-up apparatus as set forth in claim 26,
wherein the birefringent crystal element is disposed so that the crystal axis of the birefringent crystal element is in correspondence with polarization plane of light beams emitted from the light source.

28. An optical pick-up apparatus as set forth in claim 26,
wherein the optical element is formed in a plate form having a pair of surfaces in parallel to each other.

**29.** An optical pick-up apparatus as set forth in claim 23,
which further comprises a quarter wave plate disposed between the optical element and the object lens.

**30.** An optical pick-up apparatus as set forth in claim 29,
wherein the quarter wave plate is attached at the incident surface side of light beams incident through the object lens of the optical element.

**31.** An optical pick-up apparatus comprising:
a light source;
an object lens for allowing light beams emitted from the light source to be converged at a point on the optical axis;
an optical element disposed in an outgoing light path of light beams emitted from the light source between the light source and the object lens to change, by 90 degrees, optical path of light beams emitted from the light source, and having birefringence to exhibit the walk-off effect to carry out separation between light beams emitted from the light source and light beams incident through the object lens; and
a light receiving element for receiving the light beams emitted from the optical element.

**32.** An optical pick-up apparatus as set forth in claim 31,
wherein the optical element is comprised of uni-axial birefringent crystal element.

**33.** An optical pick-up apparatus as set forth in claim 32,
wherein the optical element is disposed so that the rays of light axis takes 45 degrees with respect to polarization direction of light beams emitted from the light source.

**34.** An optical pick-up apparatus as set forth in claim 32,
wherein the optical element is such that the rays of light axis is disposed in a direction where P-polarized light direction and S-polarized light direction of light beams incident through the object lens are substantially equal to each other.

**35.** An optical pick-up apparatus as set forth in claim 32,
wherein the optical element is formed in a plate form having a pair of surfaces in parallel to each other disposed in the state inclined on the optical axis of the object lens so as to change, by 90 degrees, optical path of light beams emitted from the light source.

**36.** An optical pick-up apparatus as set forth in claim 35,
wherein the optical element produces normal rays of light and abnormal rays of light from light beams incident through the object lens.

**37.** An optical pick-up apparatus as set forth in claim 36,
which further first and second light receiving means for respectively receiving the normal rays of light and the abnormal rays of light.

**38.** An optical pick-up apparatus as set forth in claim 37,
wherein the first and second light receiving means are disposed within the same plane.

# FIG.1

# FIG.2

**FIG.3**

**FIG.4**

**FIG.5**

**FIG.6**

EP 0 722 167 A1

**FIG.7**

18

## FIG.8(a)

**BEFORE-FOCUS**

## FIG.8(b)

**AFTER-FOCUS**

## FIG.8(c)

**IN-FOCUS**

**FIG.9**

# FIG.10

**FIG.11**

**FIG.12**

EP 0 722 167 A1

**FIG.13**

**32**

**Lp**

**Ls**

**C-AXIS**

**E**

**DIRECTION OF
INCLINATION**

# FIG.14

**34**

**33**

**32**

**31**

**E**

**Ls**

**Lp**

**35**

# FIG.15

**FIG.16**

**FIG.17**

**FIG.18**

**FIG.19**

## INTERNATIONAL SEARCH REPORT

| | International application No. |
|---|---|
| | PCT/JP95/01511 |

### A. CLASSIFICATION OF SUBJECT MATTER

Int. Cl$^6$  G11B7/135

According to International Patent Classification (IPC) or to both national classification and IPC

### B. FIELDS SEARCHED

Minimum documentation searched (classification system followed by classification symbols)

Int. Cl$^6$  G11B7/135, G11B11/10

Documentation searched other than minimum documentation to the extent that such documents are included in the fields searched

| Jitsuyo Shinan Koho | 1926 – 1995 |
|---|---|
| Kokai Jitsuyo Shinan Koho | 1971 – 1995 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP, 3-29129, A (NEC Corp.), February 7, 1991 (07. 02. 91), Line 11, upper left column to line 17, lower right column, page 3, Figs. 1, 6 (Family: none) | 1, 2, 4, 5, 6 |
| X | JP, 4-38631, A (Yamaha Corp.), February 7, 1992 (07. 02. 92), Line 5, column 11 to line 1, column 21 (Family: none) | 2, 7, 9-18, 20, 31-38 |
| A | JP, 63-291238, A (Seiko Epson Corp.), November 29, 1988 (29. 11. 88), Line 3, lower right column, page 2 to line 4, upper right column, page 3, Figs. 1, 3 (Family: none) | 23-26, 28 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| October 16, 1995 (16. 10. 95) | November 7, 1995 (07. 11. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)